# EUROPEAN PATENT APPLICATION

(11) **EP 3 364 271 A1**
(43) Date of publication of application: **22.08.2018**
(21) Application number: 16855621.5
(22) Date of filing: 23.08.2016
(51) Int. Cl.: G06F 3/01

(54) **APPARATUS AND METHOD FOR APPLYING HAPTIC ATTRIBUTES USING PERCEPTUAL TEXTURE SPACE**

(30) Priority: 14.10.2015 KR 20150143315
(71) Applicant: Center of Human-Centered Interaction for Coexistence, Seongbuk-gu, Seoul 02792 (KR)
(72) Inventor: JEON, Seokhee, Suwon-si Gyeonggi-do 16708 (KR); AHN, Sang Chul, Seoul 02792 (KR); LIM, Hwasup, Seoul 02792 (KR)
(74) Representative: Viering, Jentschura & Partner mbB Patent- und Rechtsanwälte
(86) International application number: PCT/KR2016/009284
(87) International publication number: WO 2017/065403

(57) **Abstract**

Embodiments relate to an apparatus for applying a haptic property using a texture perceptual space and a method therefor, the apparatus including an image acquirer configured to acquire an image of a part of a virtual object inside a virtual space, a perceptual space position determiner configured to determine a position of the image inside a texture perceptual space in which a plurality of haptic models are arranged at predetermined positions, using feature points of the acquired image, a haptic model determiner configured to determine a haptic model that is closest to the determined position of the image, and a haptic property applier configured to apply a haptic property of the determined haptic model to the part of the virtual object, in which each of the haptic models includes a texture image and a haptic property for a specific object.

## Description

### [Technical Field]

Embodiments relate to an apparatus and method for applying a haptic property for a virtual object, and more particularly, to an apparatus and method for applying haptic properties to virtual objects using a haptic library consisting of multiple haptic property models arranged on a texture perceptual space constructed using multidimensional scaling technique.

### [Background Art]

In the related art, a haptic application uses a scheme in which a haptic model is converted into a library format with respect to each haptic property, the most suitable haptic model is cognitively found in a library using metadata of the library and metadata of a three-dimensional model, and the most suitable haptic model is matched.

However, in the above-described scheme, since the haptic model is cognitively found using the metadata of the library and the metadata of the three-dimensional model, a long time is consumed, and there is a lack of consistency.

### [Disclosure]

### [Technical Problem]

Thus, in order to solve the above-described problems, a technology is required in which a haptic property is not manually assigned by a human but is automatically assigned based on characteristics of human perception.

Technical problems of the present disclosure are not limited to the above-described problems, and other not-described technical problems could be clearly understood by those skilled in the art with reference to the following descriptions.

### [Technical Solution]

An apparatus for applying a haptic property using a texture perceptual space according to an embodiment of the present disclosure may include an image acquirer configured to acquire an image of a part of a virtual object inside a virtual space, a perceptual space position determiner configured to determine a position of the image inside a texture perceptual space in which a plurality of haptic models are arranged at predetermined positions, using feature points of the acquired image, a haptic model determiner configured to determine a haptic model that is closest to the determined position of the image, and a haptic property applier configured to apply a haptic property of the determined haptic model to the part of the virtual object, in which each of the haptic models includes a texture image and a haptic property for a specific object.

The apparatus for applying a haptic property using a texture perceptual space according to the embodiment of the present disclosure may further include a database configured to store information on the texture perceptual space in which the plurality of haptic models is arranged at the predetermined positions.

In the apparatus for applying a haptic property using a texture perceptual space according to the embodiment of the present disclosure, the plurality of haptic models may be arranged inside the texture perceptual space by a multidimensional scaling experiment method based on the texture image and the haptic property.

In the apparatus for applying a haptic property using a texture perceptual space according to the embodiment of the present disclosure, the perceptual space position determiner may generate feature point axes using feature points for the texture images of the haptic models inside the texture perceptual space, may determine coordinates on the feature point axes corresponding to the feature points of the acquired image, and may determine the determined coordinates as a position of the image.

In the apparatus for applying a haptic property using a texture perceptual space according to the embodiment of the present disclosure, the perceptual space position determiner may generate a plurality of feature point axes related to the plurality of feature points for the texture images of the haptic models.

In the apparatus for applying a haptic property using a texture perceptual space according to the embodiment of the present disclosure, the perceptual space position determiner may determine directions of the axes in a direction in which the variance of distribution of the feature points of the haptic models is maximized.

In the apparatus for applying a haptic property using a texture perceptual space according to the embodiment of the present disclosure, the haptic property may include information on stiffness, friction, or roughness.

In the apparatus for applying a haptic property using a texture perceptual space according to the embodiment of the present disclosure, the image acquirer may normalize the acquired image of the part.

A method of applying a haptic property using a texture perceptual space according to an embodiment of the present disclosure may include acquiring an image of a part of a virtual object inside a virtual space, determining a position of the image inside a texture perceptual space in which a plurality of haptic models are arranged at predetermined positions, using feature points for the acquired image, determining a haptic model that is closest to the determined position of the image, and applying a haptic property of the determined haptic model to the part of the virtual object, in which each of the plurality of haptic models includes a texture image and a haptic property for a specific object.

In the method of applying a haptic property using a texture perceptual space according to the embodiment of the present disclosure, the plurality of haptic models may be arranged inside the texture perceptual space by a multidimensional scaling experiment method based on the texture image and the haptic property.

In the method of applying a haptic property using a texture perceptual space according to the embodiment of the present disclosure, the determining of the position of the image may include generating feature point axes using feature points for the texture images of the haptic models inside the texture perceptual space, determining coordinates on the feature point axes corresponding to the feature points of the acquired image, and determining the determined coordinates as a position of the image.

In the method of applying a haptic property using a texture perceptual space according to the embodiment of the present disclosure, in the generating of the feature point axes, the plurality of feature point axes related to the plurality of feature points for the texture image of the haptic models may be generated.

In the method of applying a haptic property using a texture perceptual space according to the embodiment of the present disclosure, the generating of the feature point axes may include determining directions of the axes in a direction in which the variance of distribution of the feature points of the haptic models is maximized.

In the method of applying a haptic property using a texture perceptual space according to the embodiment of the present disclosure, the haptic property may include information on stiffness, friction, or roughness.

The method of applying a haptic property using a texture perceptual space according to an embodiment may further include normalizing the acquired image of the part.

A recording medium according to an embodiment of the present disclosure may store a program including a command for executing the method for applying a haptic property using a texture perceptual space.

### [Description of Drawings]

FIG. 1 is a block diagram illustrating an apparatus 10 for applying a haptic property using a texture perceptual space according to an embodiment of the present disclosure;
FIG. 2 is a view for explaining acquiring of an image from a virtual object;
FIG. 3A is a tree structure diagram for explaining a haptic model;
FIG. 3B is a view for explaining the texture perceptual space;
FIG. 3C is a view illustrating various actual objects and a state in which haptic models of the objects are arranged as points on the texture perceptual space;
FIG. 4 is a view for explaining feature point axes inside the texture perceptual space 100 and a position of an acquired image inside the texture perceptual space according to the embodiment of the present disclosure;
FIG. 5 is a view illustrating first to third feature point axes and the position 2' of the acquired image inside the texture perceptual space 100; and
FIG. 6 is a flowchart illustrating a method of applying a haptic property using a texture perceptual space according to the embodiment of the present disclosure.

### [Best Mode]

Terms used herein are merely used to describe a specific embodiment, and are not intended to limit the present disclosure. A singular expression may include a plural expression unless otherwise specified. In the present specification, it should be understood that the terms such as "include" and "have" are intended to specify that there are features, numbers, steps, operations, elements, components, or a combination thereof disclosed in the specification, but do not preclude the presence or addition of one or more other features, numbers, steps, operations, elements, components, or combinations thereof.

All the terms used herein, including technical terms and scientific terms, may have the same meanings as those generally understood by those skilled in the art to which the present disclosure pertains unless otherwise defined. The terms defined in a generally used dictionary should be interpreted to have the same meanings as the context of the related art, and are not interpreted as ideally or excessively formal meanings unless clearly defined in the present specification. The same reference numerals disclosed in the drawings denote the same members. However, in description of embodiments, when it is determined that detailed descriptions of well-known configurations or functions make the subject matter the present disclosure unclear, the detailed descriptions will be omitted. Also, the size of each component in the drawings may be exaggeratedly illustrated for description, and does not mean the actually applied size.

Embodiments described herein may be wholly hardware, partially hardware and partially software, or entirely software. In the present disclosure, a "unit", a "module", a "device", a "system", or the like refers to computer-related entities such as hardware, a combination of hardware and software, and software. For example, in the present specification, although the unit, the module, the device, the system, or the like may be a process being running, a processor, an object, an executable file, an execution thread, a program and/or a computer, the present disclosure is not limited thereto. For example, both an application being running in a computer and the computer may correspond to the unit, the module, the system, or the like in the present specification.

The embodiments will be described with reference to a flowchart disclosed in the drawings. Although the method is illustrated and described as a series of blocks for brief description, the present disclosure is not limited to a sequence of the blocks. Some blocks may be performed simultaneously or in a sequence that is different from that illustrated and described in the present specification. Further, various other branches, flow paths, and sequences of blocks, which achieve the similar or same result, may be implemented. Also, all the illustrated blocks may not be required for implementing the method described in the present disclosure. Furthermore, a method according to an embodiment of the present disclosure may be implemented in a form of a computer program for performing a series of processes, and the computer program may be recorded in a computer-readable recording medium.

Hereinafter, although configurations and features of the present disclosure will be described using embodiments, the embodiments merely illustrate the present disclosure, but do not limit the present disclosure.

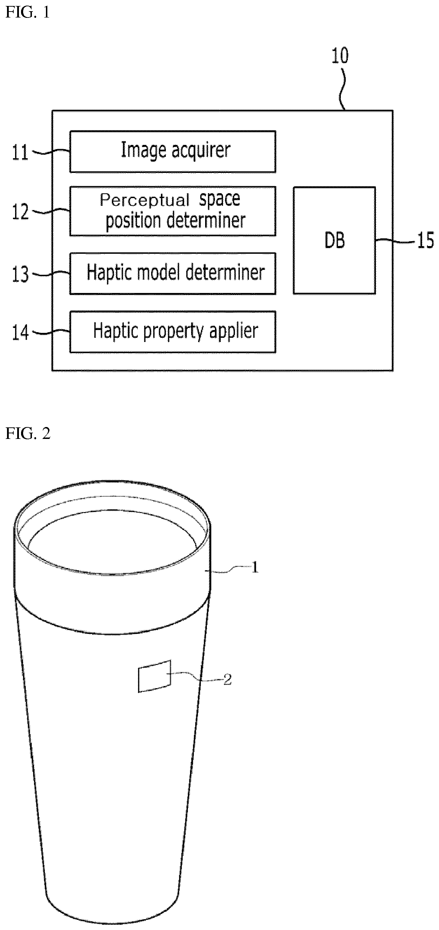

FIG. 1 is a block diagram illustrating an apparatus 10 for applying a haptic property using a texture perceptual space according to an embodiment of the present disclosure. Referring to FIG. 1, an apparatus 10 for applying a haptic property using a texture perceptual space may include an image acquirer 11, a perceptual space position determiner 12, a haptic model determiner 13, and a haptic property applier 14. The apparatus 10 for applying a haptic property using a texture perceptual space according to another embodiment may further include a database 15.

FIG. 2 is a view for explaining acquiring an image from a virtual object. Referring to FIG. 2, an image 2 of a part of a virtual object 1 is acquired. The above-described acquisition of the image may be implemented by a user command using a user interface device. In FIG. 2, a surface image of a body part 2 of a tumbler 1 corresponding to a virtual object is acquired.

In an example, the acquisition of an image of a part may be also performed with respect to a part having the same image information as one point selected by a user. For example, in FIG. 2, when the user selects any one part of a tumbler body, the entire body part of the virtual object 1 may be selected. Accordingly, the same haptic information may be applied to the part having the same image information. Also, the image acquirer 11 may facilitate subsequent image processing by normalizing the acquired part.

The perceptual space position determiner 12 may determine a position of the image inside the texture perceptual space in which a plurality of haptic models are arranged at predetermined positions, using feature points of the acquired image 2.

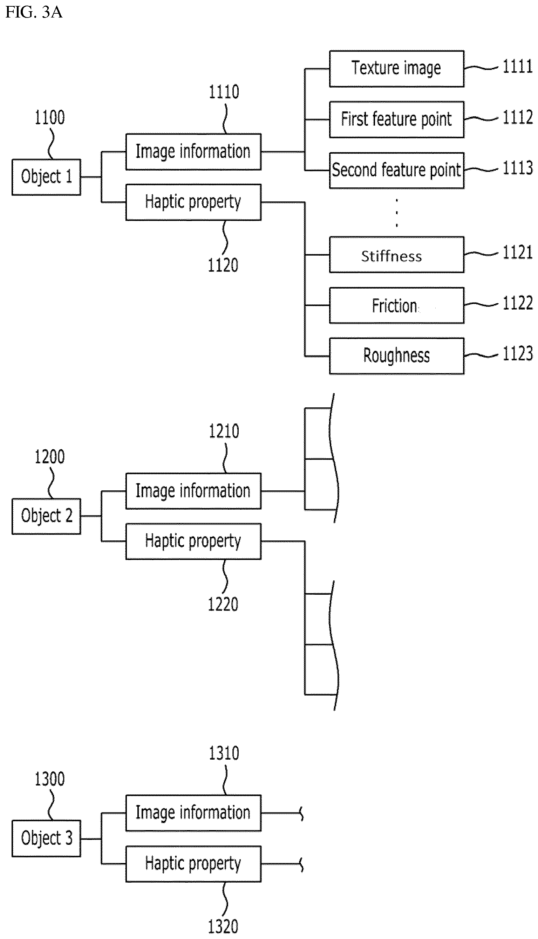

FIG. 3A is a tree structure diagram for explaining a haptic model. Referring to FIG. 3A, each of the haptic models may include image information 1110 for a specific object (for example, reference numeral 1100) and a haptic property 1120. Also, the image information 1110 may include a texture image 1111 of the corresponding object, and feature points (or feature values) 1112, 1113, ... of the texture image. Information of other objects may be structured in the same structure as the object 1 1100. That is, the haptic model may be a unit of information including the texture image and the haptic property. Here, the haptic property may include stiffness information 1121, friction information 1122, or roughness information 1123.

The image information and the haptic property of the specific object may be acquired through a sensor. For example, the sensor may include a camera, an acceleration sensor, a force sensor, or a slip sensor. The user may acquire an image and a haptic property of an actual specific object using the sensor. The specific object may be any object existing in the real world. For example, the specific object may include all objects existing in the real world, such as an outer surface and an inner surface of a vehicle, a skin of a human, glass, a desk, plastic, leather, and the like.

The perceptual space position determiner 12 may extract feature points of the acquired image 2, and may determine a position of the acquired image inside the texture perceptual space using the extracted feature points.

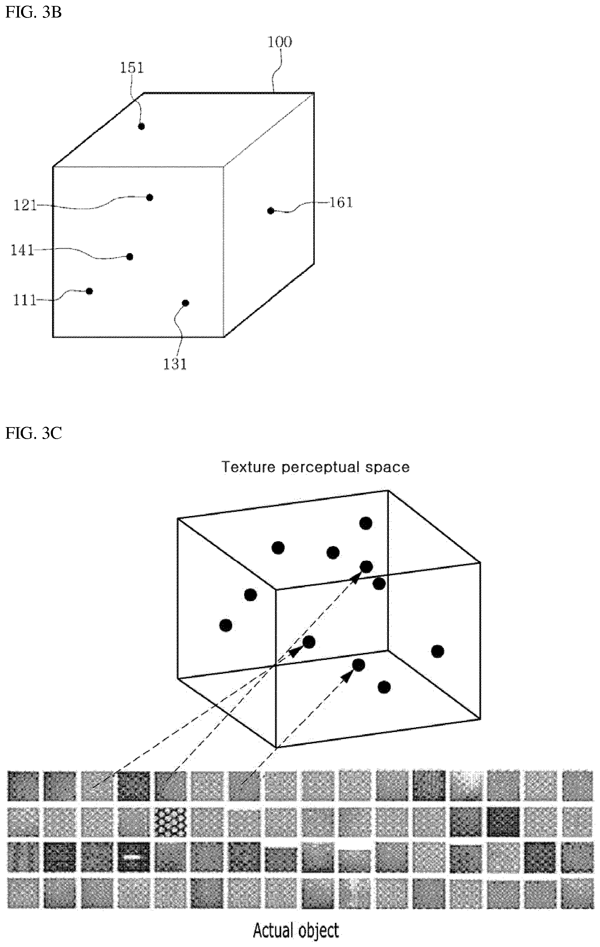

FIG. 3B is a view for explaining the texture perceptual space. Referring to FIG. 3B, a texture perceptual space 100 in which haptic models 111, 121, 131, ... corresponding to specific objects 1100, 1200, 1300, ..., respectively, are arranged at predetermined positions is illustrated.

Also, the texture perceptual space 100 is illustrated in three dimensions in FIG. 3, but may be two dimensions or other N dimensions.

As illustrated in FIG. 3B, a haptic model for a surface of a specific object may be arranged on the texture perceptual space 100. Positions where the haptic models are arranged may be determined using a multidimensional scaling method widely used in the Psychophysics. In an example, the plurality of haptic models 111 to 131 may be applied to the multidimensional scaling experiment method based on the texture image and the haptic property of the specific object. In detail, the positions of the haptic models on multidimensions may be determined based on reaction information (for example, degrees of roughness, smoothness, softness, stiffness, and the like) of experimenters touching a surface of the specific object.

FIG. 3C is a view illustrating various actual objects and a state in which haptic models of the objects are arranged as points on the texture perceptual space. Referring to FIG. 3C, a correspondence relationship between haptic models corresponding to actual objects is illustrated in dotted lines.

The perceptual space position determiner 12 may generate feature point axes using the feature points of the texture images of the haptic models inside the texture perceptual space. Alternatively, the feature point axes for the feature points inside the texture perceptual space may be generated and exist.

The perceptual space position determiner 12 may determine coordinates on the feature point axes corresponding to the feature points of the acquired image 2, and may determine the determined coordinates as a position (a position on the texture perceptual space) of the image.

Also, the perceptual space position determiner 12 may generate a plurality of feature point axes related to the plurality of feature points for the texture images of the haptic models. That is, the feature point axes for the plurality of feature points may be generated.

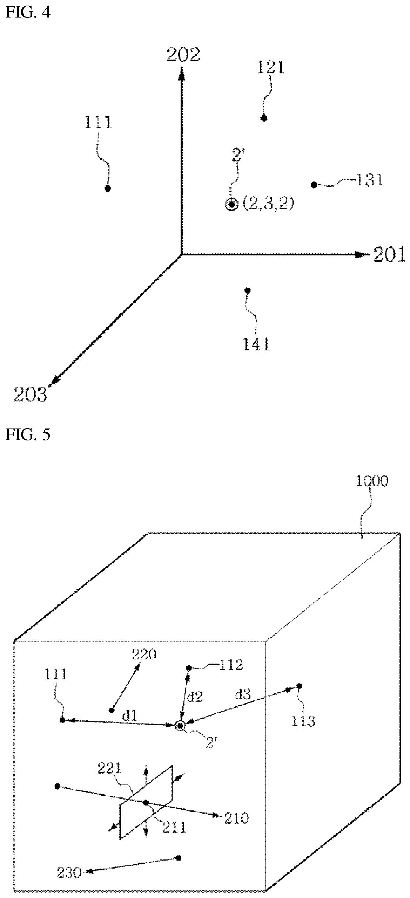

FIG. 4 is a view for explaining feature point axes inside the texture perceptual space 100 and a position of an acquired image inside the texture perceptual space according to the embodiment of the present disclosure. Referring to FIG. 4, the feature point axes generated based on the first to third feature points for the texture images of the haptic models are illustrated. For example, the perceptual space position determiner 12 may generate a first feature point axis 201 based on the first feature point for the texture images of the haptic models 111 to 131 inside the texture perceptual space 100, may generate a second feature point axis 202 based on the second feature point, and may generate a third feature point axis 203 based on the third feature point. In detail, since each of the haptic models may have a plurality of feature points (for example, first to third feature points), the perceptual space position determiner 12 may generate the feature point axes for the feature points using the sizes of the feature points.

When a first feature point of the first haptic model 111 is 1, a second feature point of the first haptic model 111 is 8, a first feature point of the second haptic model 121 is 5, and a second feature point of the second haptic model 121 is 3, the first feature point axis is generated in a direction from the first haptic model 111 to the second haptic model 121, and the second feature point axis may be generated in a direction from the second haptic model 121 to the first haptic model 111. However, since two or more feature points are actually used, when values of the feature points of the entire haptic models are considered, the feature point axes may not include the corresponding haptic models. The perceptual space position determiner 12 generates the feature point axes in a direction in which the variance of distribution of values of the feature points is maximized.

That is, the perceptual space position determiner 12 may arrange all objects for the feature points of the image according to the values of the feature points, may find a direction along which the distribution is distributed with its largest variance, and may generate the feature point axes in that direction.

For instance, when a vector of the first feature point for the acquired image 2 is 2, a vector of the second feature point for the acquired image 2 is 3, and a vector of the third feature point for the acquired image 2 is 2, as illustrated in FIG. 4, a coordinate 2' (2, 3, 2), the most perceptually-similar point in the texture perceptual space 100 with the acquired image 2, can be determined.

In consideration of a more practical case, the first to third feature point axes may be illustrated as in FIG. 5. FIG. 5 is a view illustrating first to third feature point axes and the position 2' of the acquired image inside the texture perceptual space 100. Referring to FIG. 5, feature point axes 210 to 230 according to the feature points (for example, the first to third feature points) of the haptic models 111 to 131 are not perpendicular to each other and do not start from the same point, which is dissimilar to FIG. 4. That is, in some cases, the axes may be freely arranged on the texture perceptual space 100.

The perceptual space position determiner 12 may determine one point 211 of the feature point axes corresponding to the feature point axes (for example, reference numeral 210 in FIG. 5) corresponding to the feature points with respect to the feature points (for example, the first feature point) of the acquired image, may estimate a plane 221 that is perpendicular to the axes using determined points, and may determine an intersection point of planes as the position 2' on the texture perceptual space 100 for the acquired image 2. Although only a plane for the one point 211 of the feature point axis 210 is illustrated in FIG. 5, planes for points (that is, positions corresponding to values of the feature points of the acquired image 2) of the feature point axes 220 and 230 may be generated similarly.

The haptic model determiner 13 may determine a haptic model that is closest to a position of the determined image. Referring to FIG. 5, distances d1 to d3 between the determined position 2' of the image and the surrounding haptic models 111 to 131 may be calculated, and the closest haptic model 121 may be selected.

The haptic property applier 14 may apply a haptic property of the determined haptic model 121 to the one point 2 of the virtual object 1. For example, when the haptic property of the haptic model 121 has stiffness corresponding to a value of 1, a friction corresponding to a value of 3, and roughness corresponding to a value of 10, the haptic property for the one point 2 of the virtual object 1 may be applied as stiffness corresponding to a value of 1, a friction corresponding to a value of 3, and roughness corresponding to a value of 10.

The apparatus 10 for applying a haptic property using a texture perceptual space according to the embodiment of the present disclosure may further include the database 15 configured to store information on the texture perceptual space in which the plurality of haptic models is arranged at the predetermined positions.

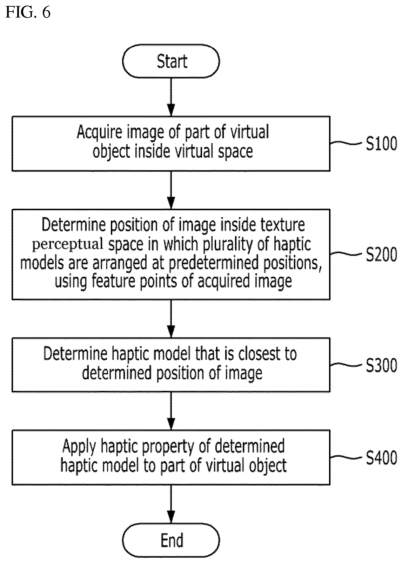

FIG. 6 is a flowchart illustrating a method of applying a haptic property using a texture perceptual space according to the embodiment of the present disclosure. Referring to FIG. 6, a method of applying a haptic property using a texture perceptual space may include acquiring an image of a part of a virtual object inside a virtual space (S100), determining a position of the image inside a texture perceptual space in which a plurality of haptic models are arranged at predetermined positions, using feature points for the acquired image (S200), determining a haptic model that is closest to the determined position of the image (S300), and applying a haptic property of the determined haptic model to the part of the virtual object (S400). Here, each of the plurality of haptic models may include a texture image and a haptic property of a specific object.

In the above-described method of applying a haptic property using a texture perceptual space, the plurality of haptic models may be arranged inside the texture perceptual space by a multidimensional scaling experiment method based on the texture image and the haptic property.

Also, the determining of the position of the image (S200) may include generating feature point axes using feature points for the texture images of the haptic models inside the texture perceptual space, determining coordinates on the feature point axes corresponding to the feature points of the acquired image, and determining the determined coordinates as a position of the image.

Also, the generating of the feature point axes may include generating a plurality of feature point axes related to the plurality of feature points for the texture images of the haptic models.

Also, the generating of the feature point axes may include determining directions of the axes in a direction in which the variance of distribution of the feature points of the haptic models is maximized.

Also, the haptic property may include information on stiffness, information on a friction, or information on roughness.

The method of applying a haptic property using a texture perceptual space according to another embodiment may further include normalizing the acquired image of the part.

A computer-readable recording medium according to an embodiment of the present disclosure may include a command for executing the above-described method for applying a haptic property using a texture perceptual space.

Although the present disclosure has been described above with reference to specific matters such as detailed components, delimited embodiments, and the drawings, this is merely provided to help better understanding of the present disclosure, and the present disclosure is not limited to the above embodiments. Further, those skilled in the art to which the present disclosure pertains may conceive various modifications and changes based on the above description.

Thus, the spirit of the present disclosure should not be limited to the above-described embodiments, and all things equally or equivalently changed from the appended claims as well as the appended claims may be included in the scope of the spirit of the present disclosure.

## Claims

1. An apparatus for applying a haptic property using a texture perceptual space, the apparatus comprising:
an image acquirer configured to acquire an image of a part of a virtual object inside a virtual space;
a perceptual space position determiner configured to determine a position of the image inside a texture perceptual space in which a plurality of haptic models are arranged at predetermined positions, using feature points of the acquired image;
a haptic model determiner configured to determine a haptic model that is closest to the determined position of the image; and
a haptic property applier configured to apply a haptic property of the determined haptic model to the part of the virtual object,
wherein each of the haptic models includes a texture image and a haptic property for a specific object.

2. The apparatus of claim 1, further comprising:
a database configured to store information on the texture perceptual space in which the plurality of haptic models is arranged at the predetermined positions.

3. The apparatus of claim 1, wherein the plurality of haptic models is arranged inside the texture perceptual space by a multidimensional scaling experiment method based on the texture image and the haptic property.

4. The apparatus of claim 3, wherein the perceptual space position determiner generates feature point axes using feature points for the texture images of the haptic models inside the texture perceptual space,
determines coordinates on the feature point axes corresponding to the feature points of the acquired image, and
determines the determined coordinates as a position of the image.

5. The apparatus of claim 4, wherein the perceptual space position determiner generates a plurality of feature point axes related to a plurality of feature points for the texture images of the haptic models.

6. The apparatus of claim 4, wherein the perceptual space position determiner determines directions of the axes in a direction in which the variance of distribution of the feature points of the haptic models is maximized.

7. The apparatus of claim 1, wherein the haptic property includes information on stiffness, information on a friction, or information on roughness.

8. The apparatus of claim 1, wherein the image acquirer normalizes the acquired image of the part.

9. A method of applying a haptic property using a texture perceptual space, the method comprising:
acquiring an image of a part of a virtual object inside a virtual space;
determining a position of the image inside a texture perceptual space in which a plurality of haptic models are arranged at predetermined positions, using feature points for the acquired image;
determining a haptic model that is closest to the determined position of the image; and
applying a haptic property of the determined haptic model to the part of the virtual object,
wherein each of the plurality of haptic models includes a texture image and a haptic property for a specific object.

10. The method of claim 9, wherein the plurality of haptic models is arranged inside the texture perceptual space by a multidimensional scaling experiment method based on the texture image and the haptic property.

11. The method of claim 10, wherein the determining of the position of the image includes:
generating feature point axes using feature points for the texture images of the haptic models inside the texture perceptual space;
determining coordinates on the feature point axes corresponding to the feature points of the acquired image; and
determining the determined coordinates as a position of the image.

12. The method of claim 11, wherein the generating of the feature point axes includes,
generating the plurality of feature point axes related to the plurality of feature points for the texture image of the haptic models.

13. The method of claim 11, wherein the generating of the feature point axes includes,
determining directions of the axes in a direction in which the variance of distribution of the feature points of the haptic models is maximized.

14. The method of claim 9, wherein the haptic property includes information on stiffness, information on a friction, or information on roughness.

15. The method of claim 9, further comprising:
normalizing the acquired image of the part.

16. A recording medium configured to store a program comprising a command for executing the method of any one of claims 9 to 15.
